# EUROPÄISCHE PATENTANMELDUNG

(11) **EP 1 093 214 A2**
(43) Veröffentlichungstag der Anmeldung: **18.04.2001**
(21) Anmeldenummer: 00115961.5
(22) Anmeldetag: 26.07.2000
(51) Int. Cl.: H02P 3/04

(54) **Linearantrieb**

(30) Priorität: 15.10.1999 DE 29918221 U
(71) Anmelder: Dewert Antriebs- und Systemtechnik GmbH & Co. KG, D-32278 Kirchlengern (DE)
(72) Erfinder: Finkemeyer, Horst, 49328 Melle (DE); Herzig, Fried-Helm, 32547 Bad Oeynhausen (DE)
(74) Vertreter: Specht, Peter, Dipl.-Phys.

(57) **Zusammenfassung**

Ein als Linearantrieb ausgebildeter Möbelantrieb mit mindestens einem Antriebsmotor, der mit einem Linear bewegbaren Abtriebsglied gekoppelt ist und der Antrieb außerdem mit einem gesteuerten Bremselement ausgerüstet ist, soll so gestaltet werden, daß durch die Bremseinrichtung keine Vergrößerung des Gehäuses notwendig ist, wobei die Funktion der Bremseinrichtung ohne Verzögerung erfüllt ist.

Erfindungsgemäß ist der Möbelantrieb mit einem Stellglied in Form eines Piezzo-Aktor (10) ausgestattet, der mit einem auf die Ankerwelle 813) des Antriebsmotors wirkenden Bremselement (11, 12) direkt oder indirekt gekoppelt ist. Vorzugsweise ist der Piezzo-Aktor (10) an die elektrischen Anschlüsse (20, 21) des Antriebsmotors angeschlossen.

Der in Frage kommende Linearantrieb ist bevorzugt zum Verstellen eines Lattenrostes oder eines Sessels ausgelegt.

## Beschreibung

Die Erfindung bezieht sich auf einen Linearantrieb, vorzugsweise auf einen Möbelantrieb mit mindestens einem Antriebsmotor mit dem wenigstens ein linear bewegbares Abtriebsglied antriebstechnisch gekoppelt ist, und mit einem innerhalb des Gehäuses des Antriebsmotors angeordneten, mittels eines Stellgliedes steuerbaren Bremselement.

Bei vielen Einsatzfällen des in Frage kommenden Linearantriebes, beispielsweise für verstellbares Teile eines Bettes ist der Linearantrieb so ausgebildet, daß ein Gleichstrommotor über ein Schneckengetriebe eine Spindel antreibt, auf der das ausschließlich linear bewegbare Abtriebsglied in Form einer Spindelmutter drehfest aufgesetzt ist. Das Abtriebsglied ist mit dem entsprechenden, zu verstellenden Bauteil über besondere Anlenkmittel derart verbunden, daß die Linearbewegung auf das Bauteil übertragen wird.

Bei dem in Frage kommenden Linearantrieb kann nicht ausgeschlossen werden, daß dieser bei abgeschaltetem Antriebsmotor zurückläuft, da zwar der Antriebszug selbsthemmend ist, jedoch nur bis zu einer bestimmten Krafteinwirkung, da die mechanische Selbsthemmung des Antriebszuges begrenzt ist. Daraus ergibt sich, daß die konstruktiven Gestaltungsmöglichkeiten wesentlich eingeschränkt sind.

Der Antriebsmotor kann ein Gleichstrom- oder ein Wechselstrommotor sein. Sofern dieser ein Gleichstrommotor ist, ist es bekannt, die Motoranschlüsse bei Nichtbetrieb kurzzuschließen. Dadurch wird eine sogenannte generatorische Bremse wirksam, weil der Gleichstrommotor unter der Lasteinwirkung als Generator arbeitet und demzufolge bei einem Kurzschluß einen Strom mit sehr hoher Stärke liefern muß. Daraus ergibt sich, daß das Antriebsmoment erhöht und die Grenze des Anfahrens unter Last noch weiter erhöht wird. Häufig sind jedoch die Einsatzfälle äußerst ungünstig, so daß bei einer geforderten Mindestverstellgeschwindigkeit die mechanische Selbsthemmung aufgrund der Auslegung der Getriebestufen erheblich abnimmt.

Es sind deshalb verschiedene Maßnahmen bekannt, um mittels zusätzlicher Bremselemente den Antriebszug auch unter Einwirkung einer Last im Stillstand zu belassen. So ist es beispielsweise bekannt, daß die Ankerwelle des Motors ein Anschlagmittel aufweist, welches zusammen mit einem von einem Elektromagnet betätigbaren beweglichen Anschlag den Stillstand des Motors bei Nichtbetrieb ermöglicht. Nachteilig ist hierbei, daß ein zusätzliches Bauteil auf die Ankerwelle aufgesetzt werden muß, daß die Abmessungen des Gehäuses des Antriebsmotors erhöht werden müssen und daß der Elektromagnet elektrische Energie verbraucht. Außerdem sind relativ viele Bauteile notwendig. Bei einer Verwendung des Linearantriebes als Möbelantrieb ist die benötigte Leistung relativ gering. Bei höheren Leistungen, beispielsweise bei Maschinen sind elektromagnetische Bremssysteme bekannt. Die Ankerwelle des Motors wird über eine Scheibenbremsvorrichtung gebremst, wobei die Bremskraft durch eine Feder aufgebracht wird, die im Stillstand des Motors zur Wirkung kommt. Beim Lauf des Motors wird die Kraft des Federspeichers durch einen Elektromagneten aufgehoben. Die Übertragung einer solchen Anordnung auf einen Linearantrieb, der im Normalfall als Stelltrieb verwendet wird, ist jedoch nicht möglich, da der konstruktive Aufwand zu hoch ist.

Der Erfindung liegt die Aufgabe zugrunde, einen Linearantrieb der eingangs näher beschriebenen Art so zu gestalten, daß durch die Bremseinrichtung keine Vergrößerung des Gehäuses notwendig ist, und daß die Funktion der Bremseinrichtung ohne Verzögerung oder ohne eine wesentliche Verzögerung erfüllt ist. Die gestellte Aufgabe wird gelöst, indem das Stellglied ein durch Beaufschlagung mit elektrischer Spannung ein seine Form verändernder Aktuator, vorzugsweise ein Piezzo-Aktor ist.

Durch die Veränderung eines Akuators, der durch Beaufschlagung bzw. durch Flutung mit einer elektrischen Spannung seine Form verändert, wird die Bremseinrichtung konstruktiv äußerst einfach, so daß jeder normale Antriebsmotor damit ausgerüstet werden kann. Je nach dem Anwendungsfall kann die Bremseinrichtung so ausgelegt sein, daß diese bei Beaufschlagung des Aktuators mit Spannung gelöst oder in den Bremszustand versetzt wird. Sofern der Linearantrieb ein Möbelantrieb ist, ist vorgesehen, daß die Bremseinrichtung gelöst wird, wenn der Aktuator mit Spannung beaufschlagt wird. Die Verstellung eines angeschlossenen Bauteils erfolgt dann ungebremst, sobald jedoch der Antriebsmotor abgeschaltet wird, wird die Bremseinrichtung aktiviert, so daß das angeschlossene Bauteil in der Stellung verbleibt. Der Antriebszug kann selbsthemmend sein, wobei durch die Bremseinrichtung sichergestellt ist, daß auch bei einer gegenüber dem Eigengewicht vergrößerten Belastung das Bauteil in der Stellung verbleibt. Es könnte jedoch auch ein nichtselbsthemmender Antriebszug verwendet werden, wobei dann die Bremseinrichtung die Last bei abgeschaltetem Motor hält. Da der Verstellweg des Bremselementes der Bremseinrichtung zum Überführen von der gelösten in die Bremsstellung und umgekehrt äußerst gering ist, können auch von den Abmessungen her relativ kleine Aktuatoren eingesetzt werden. Das erforderliche Bremsmoment, welches durch die mechanische Belastung des Linearantriebes bestimmt ist, ist an der Ankerwelle des Motors am geringsten. Damit auch die das Bremsmoment aufbringenden Bauelemente äußerst klein sein können, ist vorgesehen, daß der Aktuator mit einem auf die Ankerwelle des Antriebsmotors wirkenden Bremselement gekoppelt ist. Damit ein Nachlauf des Antriebszuges nach dem Abschalten des Antriebsmotors verhindert wird, ist vorgesehen, daß der Aktuator an die elektrischen Anschlüsse des Antriebsmotors angeschlossen ist. Das Aktivieren bzw. Deaktivieren des Aktuators erfolgt dann gleichzeitig ohne Verzögerung mit dem Ein- und Ausschalten des Antriebsmotors.

In einfachster Gestaltung ist vorgesehen, daß jeder Aktuator fest mit dem Bremselement der Bremseinrichtung verbunden ist. Dabei muß jedoch sichergestellt sein, daß der Aktuator bei der Beaufschlagung mit einer elektrischen Spannung das Bremselement löst. Dies wäre beispielsweise möglich, wenn der Aktuator bei Beaufschlagung mit der Spannung von einer Kreisform in eine Ovalform überführt würde. Zweckmäßigerweise wirken auf die Ankerwelle des Motors zwei einander dieametral gegenüber liegende Bremselemente. Dadurch wird verhindert, daß durch die Bremskraft ein Biegemoment auf die Ankerwelle übertragen wird. Es ist dann in einer ersten Ausführung vorgesehen, daß jedem Bremselement ein Aktuator funktionell zugeordnet ist. Es ist jedoch auch möglich, daß zwei oder mehr Bremselemente durch einen einzigen Aktuator betätigbar sind, und daß zwischen dem Aktuator und jedem Bremselement ein federbelastetes Gestänge oder ein Hebel in der Weise zwischengeschaltet ist, daß die Bremskraft bei abgeschaltetem Antriebsmotor durch die Feder bzw. die Federn aufgebracht wird. Der Aktuator wirkt dann bei eingeschaltetem Antriebsmotor entgegen der Wirkung der Federn. Dies ist besonders vorteilhaft, wenn der Linearantrieb relativ kurzzeitig in größeren Zeitabständen eingeschaltet wird, wie es beispielsweise bei Möbelantrieben der Fall ist. Zweckmäßigerweise ist der Aktuator in den Stromkreis des Antriebes integriert. Dadurch werden keine zusätzlichen Leitungen notwendig, die die Stromversorgung des Aktuators gewährleisten. In einfachster Weise ist dies möglich, wenn der Aktuator parallel zum Antriebsmotor geschaltet ist. Es ist jedoch ebenso möglich, daß der Stromkreis des Aktuators von einem Relais der Steuerung des Antriebsmotors geschaltet wird. In diesem Stromkreis sind dann zweckmäßigerweise zwei paarweise und gegeneinander ausgerichtete Dioden sowie ein Schalter angeordnet.

Anhand der beiliegenden Zeichnungen wird die Erfindung noch näher erläutert. Es zeigen:
- **Figur 1**: ein als Piezzo-Aktor ausgebildeter Aktuator als Einzelheit in seinen beiden Formen,
- **Figur 2**: die durch zwei Bremselemente bremsbare Ankerwelle eines Motors, rein schematisch,
- **Fig. 3** und **4**: die indirekt mit dem Aktuator verbundenen Bremselemente in zwei verschiedenen Ausführungen,
- **Figur 5**: die elektrische Verknüpfung des Aktuators mit dem Stromkreis des Antriebsmotors zeigend und
- **Figur 6**: ein Blockschaltbild, bei dem der Stromkreis des Aktuators von einem Relais der Steuereinheit des Antriebsmotors gesteuert wird.

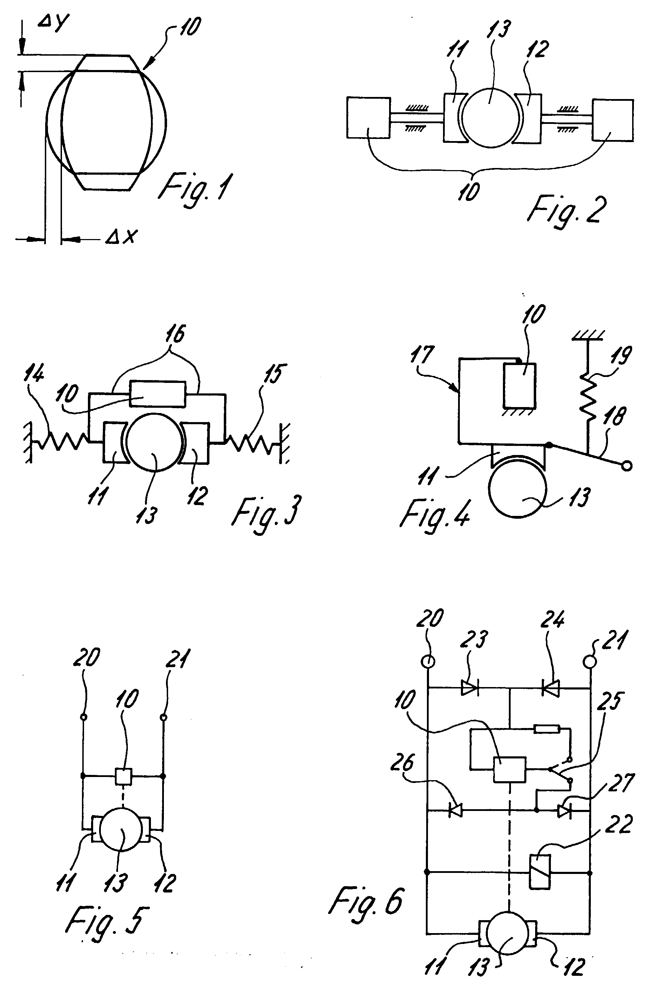

Der in der Figur 1 als ein Beispiel dargestellte Aktuator verändert seine Form von einer Kreis- oder Kugelform in eine Ovalform bei Beaufschlagung mit einer elektrischen Spannung. Die Veränderung der Form kann auch umgekehrt sein, sie sollte den jeweiligen Anforderungen entsprechen. Sofern der Linearantrieb ein Möbelantrieb ist, wird ein Aktuator 10 gewählt, der bewirkt, daß das Bremselement 11 oder die Bremselemente 11, 12 bei Beaufschlagung des nicht dargestellten Antriebsmotors in der Lösestellung sind. Die Beträge, um die sich der Aktuator 10 in der X-Achse und in der Y-Achse ändert, ist durch die Delta-X und Delta-Y gekennzeichnet.

Bei der Ausführung nach der Figur 2 ist von dem Antriebsmotor lediglich die Ankerwelle 13 dargestellt. Auf die Ankerwelle 13 wirken zwei einander gegenüber liegende Bremselemente 11, 12, die fest mit den beiden Aktuatoren 10 gekoppelt sind. Dies kann beispielsweise über Bolzen erfolgen, die in Gleitlagern verschieblich geführt sind. Bei der Ausführung nach der Figur 3 wirken auf die beiden Bremselemente 13 direkt zwei Druckfedern 14, 15, die bei nicht eingeschaltetem Antriebsmotor die Bremselemente 11, 12 mit einer bestimmten Kraft gegen die Motorwelle 13 drücken. Wird der Motor eingeschaltet, wird der Aktuator 10 derart aktiviert, daß über ein Gestänge oder einen ortsfest gelagerten Winkelhebel 16 das daran angeschlossene Bremselement 11, 12 in die Lösestellung entgegen der Wirkung der Druckfedern 14, 15 verfahren wird. Bei dieser Ausführung wird für zwei Bremselemente 11, 12 nur ein Aktuator 10 benötigt. Bei der Ausführung nach der Figur 4 ist der Aktuator 10 über ein U-förmiges Gestänge 17 mit einem Bremselement 11 bzw. 12 gekoppelt. Das Gestänge 17 ist im Bereich des Bremselementes 11 drehbar gelagert. An das Gestänge 17 ist außerdem ein Hebel 18 angelenkt, der um einen ortsfesten Punkt schwenkbar ist. Mittels einer Zugfeder 19 wird das Bremselement bei nicht eingeschalltetem Motor gegen die Ankerwelle 13 gedrückt. Sobald der Antriebsmotor abgeschaltet wird, verformt sich der Aktuator 10 derart, daß über das Gestänge 17 das Bremselement 11 von der Motorwelle 13 entfernt wird. Die in der Figur 4 dargestellte Anordnung könnte auch noch in spiegelbildlicher Form ebenfalls auf die Motorwelle 13 wirken.

In der Figur 5 ist dargestellt, daß der Aktuator 10 in den Stromkreis für den Antriebsmotor integriert ist. Die Ausführung nach der Figur 5 zeigt, daß in einfachster Weise der Aktuator 10 parallel zum Motor geschaltet ist. Die beiden Anschlüsse für den Stromkreis des Antriebsmotors sind durch die Bezugszeichen 20 und 21 gekennzeichnet. Bei der Ausführung nach der Figur 6 ist der Aktuator 10 ebenfalls in den Stromkreis des Antriebsmotors integriert. Sobald ein Relais 22 in nicht näher erläuterter Weise geschaltet wird, kann der Strom über zwei Dioden 23, 24 fließen, so daß der Aktuator 10 aktiviert wird. Gleichzeitig wird ein Schalter 25 geschlossen, so daß der Strom über zwei entgegen gerichtete Dioden 26, 27 abfließen kann. Sobald über das Relais 22 der Motor abgeschaltet wird, wird der Schalter 25 umgeschaltet, wodurch der Stromkreis für den Aktuator 10 unterbrochen ist.

Die Antriebsmotoren können Wechselstrommotore oder Gleichstrommotore sein. Sie werden über eine Steuereinheit, zum Beispiel über ein Relais und/oder Halbleiter oder ähnliche elektrische oder elektronische Bauteile durch die allgemein bekannten Handbedieneinrichtungen oder auch drahtlose Fernbedienungen in die verschiedenen Bewegungs- oder Drehrichtungen geschaltet. Die Erfindung ist nicht auf die dargestellten Ausführungsbeispiele beschränkt. Wesentlich ist die Verwendung ein oder mehrere Aktuatoren in den unterschiedlichsten Bauformen, um direkt oder indirekt das Bremselement 11 oder die Bremselemente 11, 12 so zu beeinflussen, daß entweder das Bremselement oder die Bremselemente 11, 12 in die Lösestellung oder in die Bremsstellung verfahren werden.

## Patentansprüche

1. Linearantrieb, vorzugsweise Möbelantrieb mit mindestens einem Antriebsmotor mit dem wenigstens ein linear bewegbares Abtriebsglied antriebstechnisch gekoppelt ist, und mit einem innerhalb des Gehäuses des Antriebsmotors angeordneten, mittels eines Stellgliedes steuerbaren Bremselement, **dadurch gekennzeichnet, daß** das Stellglied mindestens ein durch Beaufschlagung mit elektrischer Spannung seine Form verändernder Aktuator (10), vorzugsweise ein Piezzo-Aktor ist.

2. Linearantrieb nach Anspruch 1, **dadurch gekennzeichnet, daß** der Aktuator (10) mit einem auf die Ankerwelle (13) des Antriebsmotors wirkenden Bremselement (11, 12) direkt oder indirekt gekoppelt ist.

3. Linearantrieb nach Anspruch 1, **dadurch gekennzeichnet, daß** der Aktuator (10) an die elektrischen Anschlüsse (20, 21) des Antriebsmotors angeschlossen ist.

4. Linearantrieb nach Anspruch 3, **dadurch gekennzeichnet, daß** jeder Aktuator (10) fest mit dem Bremselement (11, 12) der Bremseinrichtung verbunden ist.

5. Linearantrieb nach einem oder mehreren der vorhergehenden Ansprüche 1 bis4, **dadurch gekennzeichnet, daß** der Ankerwelle (13) des Antriebsmotors zwei Bremselemente (11, 12) zugeordnet sind, und daß jedem Bremselement (11, 12) ein Aktuator (10) funktionell zugeordnet ist.

6. Linearantrieb nach einem oder mehreren der vorhergehenden Ansprüche 1 bis 4, **dadurch gekennzeichnet, daß** der Ankerwelle (13) des Antriebsmotors zwei Bremselemente (11, 12) funktionell zugeordnet sind, und daß zwischen den beiden Bremselementen (11, 12) jeweils ein federbelastetes Gestänge oder ein Hebel (16, 17) angeordnet ist.

7. Linearantrieb nach einem oder mehreren der vorhergehenden Ansprüche 1 bis 6, **dadurch gekennzeichnet, daß** jeder Aktuator (10) in den Stromkreis des Antriebsmotors integriert ist.

8. Linearantrieb nach Anspruch 7, **dadurch gekennzeichnet, daß** der Aktuator (10) parallel zum Antriebsmotor geschaltet ist.

9. Linearantrieb nach Anspruch 7, **dadurch gekennzeichnet, daß** der Stromkreis jedes Aktuators (10) von einem Relais (22) der Steuerung des Antriebsmotors geschaltet wird.

10. Linearantrieb nach Anspruch 9, **dadurch gekennzeichnet, daß** in den Stromkreis des Aktuators (10) paarweise angeordnete Dioden (23, 24, 26, 27) sowie ein Schalter (25) angeordnet sind, und daß die paarweise angeordneten Dioden entgegen gerichtet sind.
